# EUROPEAN PATENT APPLICATION

(11) **EP 1 342 499 A1**
(43) Date of publication of application: **10.09.2003**
(21) Application number: 03100453.4
(22) Date of filing: 25.02.2003
(51) Int. Cl.: B01D 53/94, B01J 35/00

(54) **Multizone catalytic converter**

(30) Priority: 07.03.2002 LU 90900
(71) Applicant: Delphi Technologies, Inc., Troy, MI 48007 (US)
(72) Inventor: BINSFELD, Jean-Claude, 4980, RECKANGE-SUR-MESS (LU); KEMMER, Christian, 7307, STEINSEL (LU)
(74) Representative: Kihn, Pierre Emile Joseph

(57) **Abstract**

The invention relates to a catalytic converter and to a method for making the same. The catalytic converter having a honeycomb type substrate comprising an inlet end, an outlet end, axial wall elements extending from the inlet end to the outlet end, and a plurality of axially enclosed channels defined by the wall elements,
- the substrate being divided in at least two zones, each zone having at least some of the channels;
- a first zone with a first coating located on the wall elements and extending substantially from the inlet end to the outlet end;
- a second zone with a second coating located on the wall elements and extending substantially from the inlet end to the outlet end.

## Description

### FIELD OF THE INVENTION

The present invention relates to catalytic converters for internal combustion engine exhaust systems. The present invention is also directed to a method for coating a substrate having a plurality of channels such as a monolithic substrate used in catalytic converters.

### BACKGROUND OF THE INVENTION

Catalytic converters are well known for the removal and/or conversion of the harmful components of exhaust gases. Catalytic converters have a variety of constructions for this purpose. In one form the converter comprises the rigid skeletal monolithic substrate on which there is a catalytic coating. The monolith has a honeycomb-type structure which has a multiplicity of longitudinal channels, typically in parallel, to provide a catalytically coated body having a high surface area.

The rigid, monolithic substrate can be fabricated from ceramics and other materials. Such materials and their construction are described, for example, in U.S. Patent Nos. 3,331,787 and 3,565,830. Alternatively, the monoliths can be fabricated from metal foil. The monolithic substrate and particularly the multiplicity of channels can be coated with a slurry of a catalytic material.

Monoliths can be dipped in washcoat and excess washcoat blown out of the channel. The process may be repeated by dipping the monoliths into the washcoat sol again.

Three-way conversion catalysts (TWC) have utility in a number of fields including the treatment of exhaust from internal combustion engines, such as automobile and other gasoline-fueled engines. Emissions standards for unburned hydrocarbons, carbon monoxide and nitrogen oxides contaminants have been set by various governments and must be met, for example, by new automobiles. In order to meet such standards, catalytic converters containing a TWC catalyst are located in the exhaust gas line of internal combustion engines. The catalysts promote the oxidation by oxygen in the exhaust gas of the unburned hydrocarbons and carbon monoxide and the reduction of nitrogen oxides to nitrogen.

Known TWC catalysts which exhibit good activity and long life comprise one or more platinum group metals (e.g., platinum or palladium, rhodium, ruthenium and iridium) located upon a high surface area, refractory oxide support, e.g., a high surface area alumina coating. The support is carried on a suitable carrier or substrate such as a monolithic carrier comprising a refractory ceramic or metal honeycomb structure.

Traditionally such TWC catalysts may be located downstream of the engine, typically under the floor of the passenger compartment and are referred to as underfloor catalytic converters.

More recently, as the performance requirements have become more stringent, the TWC are located close to the engine and are referred to as close coupled catalytic converters.

In the most recent developments, the TWC is located immediately downstream of the exhaust manifold.

### SUMMARY OF THE INVENTION

The object of the present invention is to provide a catalytic converter having lower production costs.

The present invention provides a catalytic converter having a honeycomb type substrate comprising an inlet end, an outlet end, axial wall elements extending from the inlet end to the outlet end, and a plurality of axially enclosed channels defined by the wall elements,
- the substrate being divided in at least two zones, each zone having at least some of the channels;
- a first zone with a first coating located on the wall elements and extending substantially from the inlet end to the outlet end;
- a second zone with a second coating located on the wall elements and extending substantially from the inlet end to the outlet end.

The present invention is thus directed to a substrate, preferably a honeycomb comprising a plurality of channels defined by the honeycomb walls. The channels and wall elements are parallel and typically axial to the axis of the substrate. When used in a TWC, the honeycomb has an inlet end and an outlet end, with at least some of the channels having a corresponding inlet and outlet. When used in a diesel particulate filter, substantially all the channels of the honeycomb are obstructed at one end by a plug which is inserted into the channel. Adjacent channels are obstructed at opposed ends so that each channel, which is obstructed at one end, is in contact with channels, which are obstructed at the other end. The exhaust gas, which enters one channel exits through an adjacent channel after having passed through the wall elements of the channel.

The substrate is divided in at least two zones, each having at least some of the channels. The walls of the channels of the first zone comprise a first coating extending substantially from the inlet toward the outlet end. The walls of the channels of the second zone comprise a second coating extending substantially from the inlet toward the outlet end. Thus the first and second coatings extend substantially over the whole length of the channels of the respective zone from the inlet end toward the outlet end.

These multizone catalytic converters are less costly to produce since the coating containing the catalytically active material is not uniformly applied to the entire honeycomb type substrate. The coatings are applied in at east two different zones, the coatings in each of the zones being adapted to the quantity and quality of exhaust gases flowing through the respective zone. Less coating material must applied to achieve the same result.

This is especially true for manifold converters. Indeed, because of their location in the exhaust line immediately downstream of the exhaust manifold, in many cases the flow distribution is particularly bad and the uniformity index is rather low (γ<0.95). In this type of catalytic converters, the majority of the exhaust gases have a tendency to flow through a particular zone of the catalyst, whereas in another zone comparatively very little exhaust gas will be treated. Instead of having the same coating in the entire cross section of the catalytic converter, the coating in each zone of the cross section is adapted.

The wall elements in the different zones can be coated with different catalyst compositions or architectures. The term "architecture" is used to mean the physical design of the coating in a zone considering parameters such as the number of layers of coating compositions, the thickness of the layers, and the order of layers where there are more than one layer. The zones are defined by their coating and extend over a number of channels in which there is the same coating and architecture extending substantially over the whole length of the channels.

In a preferred embodiment, the first coating in the first zone may comprise one layer of a first catalytic material and the second coating in the second zone may comprise at least two layers of the first catalytic material.

Alternatively, the first coating in the first zone may comprise one layer of a first catalytic material and the second coating may comprise a first layer of the first catalytic material and a second layer of a second catalytic material.

In another preferred embodiment, the first coating in the first zone may comprise one layer of a first catalytic material and the second coating may comprise a first layer of a second catalytic material and a second layer of the first catalytic material.

The first and second coatings may thus be made of different catalytic materials or may be made of the same catalytic material. In the later case, the coatings differ from one another by the thickness of the coatings respectively by the number of layers of the coatings.

The coatings comprise metal oxides, which can be selected from a refractory oxide, a rare earth metal oxide, a transition metal oxide, an alkaline earth metal oxide, a molecular sieve or a combination or mixture of two or more of these products.

Preferably the coatings comprise at least one precious metal component. Said precious metal components are selected from at least one of platinum, palladium, rhodium, ruthenium and iridium components.

According to another aspect of the invention, there is also presented a method for producing a catalytic converter having a honeycomb type substrate comprising an inlet end, an outlet end, axial wall elements extending from the inlet end to the outlet end, and a plurality of axially enclosed channels defined by the wall elements, the substrate comprising at least two zones, each zone having at least some of the channels. The method comprises the steps of:
a) introducing into said first zone and second zones a first coating composition so as to form a first coating extending substantially from the inlet end to the outlet end on the wall elements and;
b) temporarily obstructing the inlet end and/or the outlet end of the channels of said first zone,
c) introducing into said second zone a second coating composition so as to form a second coating extending substantially from the inlet end to the outlet end on the wall elements.

According to a further aspect of the invention, there is also presented a method for producing a catalytic converter having a honeycomb type substrate comprising an inlet end, an outlet end, axial wall elements extending from the inlet end to the outlet end, and a plurality of axially enclosed channels defined by the wall elements, the substrate comprising at least two zones, each zone having at least some of the channels. The method comprises the steps of:
a) temporarily obstructing the inlet end and/or the outlet end of the channels of said second zone,
b) introducing into said first zone a first coating composition so as to form a first coating extending substantially from the inlet end to the outlet end on the wall elements and;
c) temporarily obstructing the inlet end and/or the outlet end of the channels of said first zone and freeing the channels of the second zone,
d) introducing into said second zone a second coating composition so as to form a second coating extending substantially from the inlet end to the outlet end on the wall elements.

The temporary obstruction can be achieved i.e. by covering one end of the substrate by an appropriate template, which masks the inlet ends and/or the outlet ends of the channels so that the coating composition does not penetrate into these channels.

The methods can include one or more drying steps. The steps of drying or thermally fixing each layer are preferably conducted after coating and prior to coating a subsequent layer. The step of thermally treating the substrate upon completion of coating all layers at from 200°C to 400°C at from 1 second to 1 hour.

The each coating step can be repeated so as to obtain a multilayer coating of the same coating composition or of different coating compositions.

The methods can include a final calcining step. This can be conducted in an oven between coating layers or after the coating of all the layers on the substrate has been completed. The step of calcining can be conducted at from 200°C, preferably 250°C to 900°C at from 0.1 to 10 hours and preferably from 450°C to 750°C at from at from 0.5 to 2 hours. After the coating of all layers is complete the substrate can be calcined.

The present invention will be more apparent from the following description of a not limiting embodiment with reference to the attached drawings, wherein
Fig.1: shows a manifold converter assembly to be mounted into the exhaust line of an internal combustion engine;
Fig.2: Shows a cross section of a manifold converter;
Fig.3: Shows a cross section through a further preferred embodiment of a multizone catalytic converter.

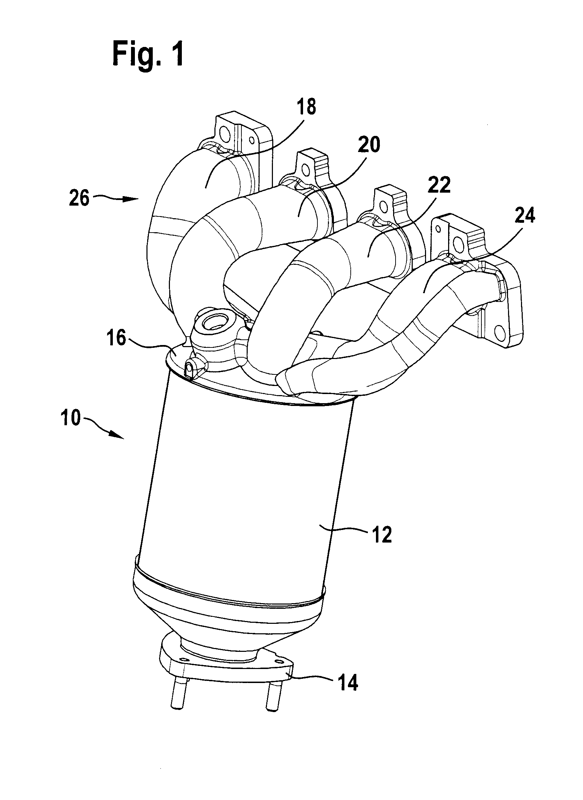

Fig. 1 shows a manifold converter assembly 10 to be mounted into the exhaust line (not shown) of an internal combustion engine. The assembly comprises a catalyst housing 12 with a lower, downstream flange 14 and an upper, upstream cover 16. The cover 16 is connected to four pipes 18, 20, 22, 24 of the manifold 26. In a lot of cases, the cover 16 and the four pipes are made in one piece of cast iron. The four pipes 18, 20, 22, 24 are connected by their upstream end to the engine bloc.

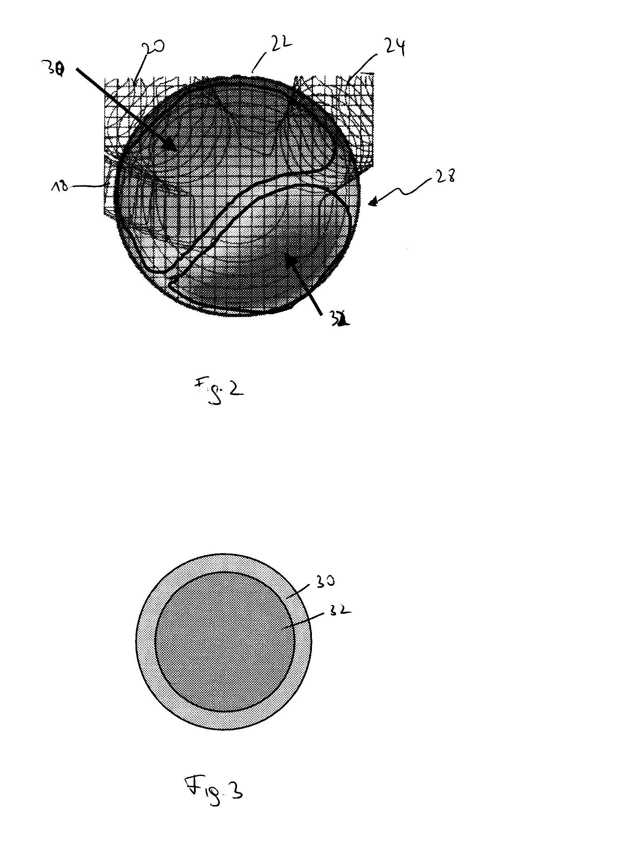

Fig 2 shows a cross section of the honeycomb type substrate 28 of a manifold converter.

The substrate 28 is divided into two zones 30, 32. The four pipes 18, 20, 22, 24 and the respective location related to the honeycomb type structure are shown. Because of the specific location of the four pipes 18, 20, 22, 24 of the manifold 26, the flow distribution thorough the converter is not uniform and the converter can be subdivided basically into two zones 30, 32 according to the quantity of gas flowing through them. A comparatively small amount of the exhaust gas flows through the first zone 30. The remainder of the exhaust gas flows through the second zone 32. Accordingly, the first zone is coated with less coating than the second zone (f.ex. 100 g/ft³ versus 120 g/ft³).

Fig. 3 shows a cross section through a further preferred embodiment of a multizone catalytic converter. This a classic catalytic converter which can be used as underfloor catalysts or as a close coupled catalysts. Since in such an application, a relatively small quantity of the exhaust gas passes through the catalyst honeycomb type structure at a location close to the walls, the catalyst is divided into two zones. The first zone 30 is located peripherally and the second zone 32 is in the center. In the case of a 4.66" (11.85 cm) round catalyst, the fact to create a 0.23 inch (0,58 cm) borderzone allows to reduce the quantity of coating by 10%.

The advantages of applying a first uniform layer of washcoat onto all the catalyst and a second layer of washcoat only to the zone(s) were it is required, less washcoat i.e. less noble metals is required. The product will become cheaper.

Furthermore, since less coating is applied, the TWC will cause less backpressure in the exhaust line and higher engine power is thus achieved.

Also since thinner washcoats are less prone to cracks and adhesion problems, the life expectancy of the TWC is higher.

The methods for producing such catalysts are easily to implement in known production processes, i.e. by using a piston coater process. It is sufficient to temporally cover the zone(s) which do not required the application of a coating.

## Claims

1. A catalytic converter having a honeycomb type substrate comprising an inlet end, an outlet end, axial wall elements extending from the inlet end to the outlet end, and a plurality of axially enclosed channels defined by the wall elements,
• the substrate being divided in at least two zones, each zone having at least some of the channels;
• a first zone with a first coating located on the wall elements and extending substantially from the inlet end to the outlet end;
• a second zone with a second coating located on the wall elements and extending substantially from the inlet end to the outlet end.

2. The catalytic converter according to claim 1 **characterised in that** the first coating in the first zone comprises one layer of a first catalytic material and **in that** the second coating in the second zone comprises at least two layers of the first catalytic material.

3. The catalytic converter according to claim 1 **characterised in that** the first coating in the first zone comprises one layer of a first catalytic material and **in that** the second coating comprises a first layer of the first catalytic material and a second layer of a second catalytic material.

4. The catalytic converter according to claim 1 **characterised in that** the first coating in the first zone comprises one layer of a first catalytic material and **in that** the second coating comprises a first layer of a second catalytic material and a second layer of the first catalytic material.

5. The catalytic converter according to any of the claims 1 to 4 **characterised in that** the coatings comprise metal oxides which can be selected from a refractory oxide, a rare earth metal oxide, a transition metal oxide, a alkaline earth metal oxide, a molecular sieve or a combination or mixture of two or more of these products.

6. The catalytic converter according to any of the claims 1 to 5 **characterised in that** the coatings comprise at least one precious metal component selected from at least one of platinum, palladium, rhodium, ruthenium and iridium components

7. The catalytic converter according to any of the claims 1 to 6 **characterised in that** the honeycomb type structure is selected from the group comprising ceramic monoliths and metallic monoliths.

8. The catalytic converter according to any of the claims 1 to 7 **characterised in that** the honeycomb type structure is selected from the group comprising flow through monoliths and wall flow monoliths.

9. A method for producing a catalytic converter having a honeycomb type substrate comprising an inlet end, an outlet end, axial wall elements extending from the inlet end to the outlet end, and a plurality of axially enclosed channels defined by the wall elements, the substrate comprising at least two zones, each zone having at least some of the channels comprising the steps of:
a) introducing into said first zone and second zone a first coating composition so as to form a first coating extending substantially from the inlet end to the outlet end on the wall elements and;
b) temporarily obstructing the inlet end and/or the outlet end of the channels of said first zone,
c) introducing into said second zone a second coating composition so as to form a second coating extending substantially from the inlet end to the outlet end on the wall elements.

10. A method for producing a catalytic converter having a honeycomb type substrate comprising an inlet end, an outlet end, axial wall elements extending from the inlet end to the outlet end, and a plurality of axially enclosed channels defined by the wall elements, the substrate comprising at least two zones, each zone having at least some of the channels comprising the steps of:
a) temporarily obstructing the inlet end and/or the outlet end of the channels of said second zone,
b) introducing into said first zone a first coating composition so as to form a first coating extending substantially from the inlet end to the outlet end on the wall elements and;
c) temporarily obstructing the inlet end and/or the outlet end of the channels of said first zone and freeing the channels of the second zone,
d) introducing into said second zone a second coating composition so as to form a second coating extending substantially from the inlet end to the outlet end on the wall elements.

11. The method of claims 9 or 10 further comprising a drying step after forming said first coating and/or said second coating.

12. The method of any of the claims 9 to 11 further comprising the steps of repeating step c) or d) so as to form in said second zone a second layer of a coating extending substantially from the inlet end to the outlet end on the wall elements

13. The method of any of the claims 9 to 12 further comprising calcining the converter after forming said second coating.
